# EUROPEAN PATENT SPECIFICATION

(11) **EP 1 240 090 B1**
(45) Date of publication and mention of the grant of the patent: **18.08.2004**
(21) Application number: 00985699.8
(22) Date of filing: 27.12.2000
(51) Int. Cl.: B65G 21/08, E01D 21/00, E01D 1/00

(54) **ENCLOSURE SYSTEM FOR CONVEYORS**
UMHÜLLUNGSSYSTEM FÜR FÖRDERER
SYSTEME D'ENCEINTE POUR CONVOYEURS

(30) Priority: 23.12.1999 GB 9930308
(43) Date of publication of application: 18.09.2002
(73) Proprietor: Tomlinson, Andrew David, Cowbridge, Vale of Glamorgan CF71 7AB (GB); Tomlinson, Martin James, Cowbridge, Vale of Glamorgan CF71 7AB (GB)
(72) Inventor: Tomlinson, Andrew David, Cowbridge, Vale of Glamorgan CF71 7AB (GB); Tomlinson, Martin James, Cowbridge, Vale of Glamorgan CF71 7AB (GB)
(74) Representative: Gibson, Stewart Harry
(86) International application number: PCT/GB2000/005000
(87) International publication number: WO 2001/047790

(56) References cited:
- EP-A- 0 462 350
- DE-A- 2 127 156
- DE-C- 3 423 998
- FR-A- 1 520 477
- FR-A- 1 562 184
- FR-A- 2 626 920

## Description

This invention relates to enclosures for bulk material handling systems, particularly conveyors, for restricting the emission of pollution (mainly fugitive dust and noise but also other potential pollutants).

Recent environmental legislation applies stringent restrictions on the emission of pollutants, especially fugitive dust and noise. Conventional enclosure solutions have been adapted to try and comply with these changes, generally with limited success.

Bulk material handling systems, especially conveyor systems, are often elevated and have traditionally been open to the air or have been provided with an asbestos cement or metal sheeted enclosure. Even when enclosed, such systems emit significant quantities of dust and other pollutants through gaps and holes in their enclosures.

Generally uninsulated, such enclosures can emit considerable noise. Providing noise-deadening insulation can create additional problems if heated material is being transported.

Typically the conveyor enclosure and its support structure have comprised some form of steel-trussed structure covered by metal sheeting or asbestos cement sheets. Fabricating steel trusses uses similar skills and equipment to those used for manufacturing conveyors, hence the supply of both components by the one company has been commonplace.

Dust is a generic term used to describe particulate matter in the size range 1-75 microns in diameter. The emission of dust from industrial processes is a worldwide problem. Particles can vary in size and composition. Particles larger than about 30 microns fall rapidly under gravity and are not usually considered problematic. Particles less than 0.1 microns are so small they do not fall under gravity appreciably, but coagulate to form larger particles that are then removed from the atmosphere.

Of prime concern to human health, however, are those fractions of the total suspended matter (TSP) whose diameter is small enough for them to enter into the pulmonary system. These are generally taken as particulates with an aerodynamic diameter of 1-10 microns, commonly addressed as the PM10 fraction of TSP.

Particulate air pollution affects the respiratory and cardiovascular systems. PM10 particles can penetrate the larynx and enter the thoracic region of the respiratory system. Health affects include increased mortality as well as increased acute and chronic morbidity, such as respiratory infections, chronic pulmonary diseases, bronchitis, asthma and childhood croup.

PM10 particles are transboundary and can travel hundreds of miles. Dust pollution caused in one country may be recorded in another.

Bulk material handling systems emit considerable quantities of dust, for example at transfer points where material falls from one conveyor system onto another, typically at a change of direction or change of slope, or due to vibrations within the conveyor system.

Air movement over the surface of the material being conveyed also releases fine particles into the air. Loose dust, which has already settled within the enclosure, may emit fine particulates into suspension in the air if disturbed. Once released, these particulates remain in suspension for considerable periods of time and can travel significant distances.

Conventional solutions, typically enclosures covered by ribbed metal cladding, find difficulties in achieving a reliable and durable dust seal. Accidental damage, loss of sealing packs, wear and tear and even the unauthorised cutting of ventilation holes by the workforce, all contribute to a dust-escape prevention system having a poor long-term performance.

Dust may be released due to vibration of the conveyor. The more flexible the structure, the greater the vibration disturbance is likely to be.

Air movement within the enclosure may be caused by thermal currents, by the effect of the moving conveyor dragging air with it and, in alternative non-sealed wall systems, by air-suction on the outside of the tube due to wind.

Turbulent air flow within the enclosure will release dust from the conveyor. The smoother the flow of air, the less dust that will be released. The internal ribbed surface of the cladding of traditional conveyor enclosures will disturb any flowing air, and is a poor detail. The ideal surface should be as smooth as possible. Sharp corners, for example at the wall-roof junction, are poor for minimizing air turbulence.

When carrying hot materials, an uninsulated metal-clad enclosure looses considerable heat through its walls, which heat could be recycled. The enclosure has a thermal gradient across its walls which produces a high motive force, tending to force out fugitive dust.

Structures can be designed without movement-joints by accommodating the stresses set up. It is difficult to achieve this with steel-framework structures, as these have a tendency to buckle.

Noise is a further potential pollutant produced by industrial processes. Noise is disruptive and stressful for workers within the industrial facility and to adjoining neighbours, and can also result in harmful affects on health. Generally a bulk material handling system generates noise, particularly if carrying heavy materials such as coal or sand. Noise-reduction standards have resulted in the traditional form of conveyor enclosure being modified, in some cases to include sound-deadening cladding. Typically, this may comprise some form of mineral wool blanket.

Attempts to upgrade traditional enclosure systems have not been totally successful. The resulting constructions are of dubious long-term effectiveness, are expensive, and have at least one serious side effect when used to carry hot materials. In the past, conveyor enclosures have been constructed with uninsulated, generally unsealed metal or asbestos cement cladding. They were therefore very effective at shedding heat. Breakdowns on conveyors carrying hot materials such as cement clinker presented few problems due to the very fast rate of cooling. However, insulating materials are as effective at containing heat as noise, which means that often repairs cannot commence until the hot material has cooled enough to allow man-excess. This may take a considerable time. Additionally, the rise in temperature may result in significant structural distress.

Conveyor enclosures which allow man-access are typically around 2 metres in depth. Proportions for trusses give a span-to-depth ratio of around 10. Thus, support trestles would be required at around 20 to 25 metre centres along the enclosure.

Conveyor systems are subject to two major load cases: firstly, the self-weight of the conveyor and the load of material being carried, acting vertically; secondly, external wind-loading on the conveyor enclosure.

As the conveyor gets higher above the ground, the effects of wind become progressively more important and the overturning effect begins to dominate the design of the trestles and their foundations. Traditional shapes of conveyor enclosure are typically what would be described, in fluid mechanics terms, as sharp-edged boxes which have a high drag coefficient. The more rounded the windward shape is, the less drag force exerted upon it. Once the ratio of the corner radius to the width of the conveyor has reached 0.33, the enclosure experiences a similar wind load as would occur as if it had a circular cross-section.

Using a circular instead of rectangular cross-section reduces the drag coefficient but increases the area facing the wind, if headroom is to be maintained. Whilst there is a saving on cost associated with designing against overturning, other costs, including a separate floor, a larger perimeter (for the same area of internal enclosure), and a more expensive shape to construct, have all acted against this apparently simple choice.

We have now devised an enclosure system which alleviates the above-noted drawbacks of conventional enclosure systems.

In accordance with the present invention, there is provided an elevated enclosure system, comprising a tubular concrete enclosure spanning upright supports and acting as a beam, as recited in claim 1. There is also povided a method according to claim 6.

This enclosure system is particularly useful for enclosing a mechanical conveyor, typically transporting bulk material.

In embodiments of the invention to be described herein, the disadvantages of dust leakage described above are alleviated by enclosing the conveyor machinery within an internally smooth-faced, thin-walled concrete tube, near rectangular in shape with a flat or near flat base, preferably with rounded corners externally and internally. The concrete tube provides a robust, low-cost means for ensuring that dust cannot escape through the walls of the conveyor enclosure and enables the air/dust mixture to be transferred to a system where it can be separated. It removes the uncertainties of dust-tightness caused by corrosion and vandalism.

The concrete tube is durable, virtually maintenance free, and is more sustainable and environmentally-sensitive than traditional metal alternatives, requiring a much lower total energy input to produce.

Unpunctured or imperforate concrete tubes are by their very nature inherently totally sealed and can virtually eliminate dust discharge to the atmosphere by leakage. No clad system (relying on seals between metal sheets) can possibly approach the same standard. In addition, an unpunctured, hollow reinforced concrete beam offers possibly the highest sound reduction structure easily achievable. Concrete by its nature is a robust material. The sound/dust seal cannot be lost easily, either by holes being intentionally cut in it or by accidental impact.

The smooth internal profile enable the inside of the tube to be more easily kept dust-free to a higher standard, with less protrusions attracting dust accumulation.

The rounded corners of the inside of the tube also reduce turbulence of the dust-laden air stream, tending to reduce the suspended solids in the air.

The smooth walls of the concrete tube are a significant improvement on the traditional corrugated cladding, which causes significant turbulence, particularly with fast-moving conveyor systems.

The concrete enclosure is more rigid than traditional structures. Induced vibrations are absorbed better by the robust concrete enclosure, with consequently reduced emission of fine dust.

Minimizing the air movement through the conveyor will minimize the volume of dust-carrying air. The provision of constraints, including bulkhead walls, along the tube will reduce the flow rate. These contraints may be in the form of solid partitions or curtains with minimum clearance for the conveyor.

The enclosure tube acts primarily as a simply-supported beam spanning adjacent upright supports or trestles. As such, the upper section of the tube is in compression and the lower section in tension. Thermal currents cause the dust-laden air to rise, but leakage cannot occur as the section in this area is uncracked. The lower section of the enclosure will exhibit fine, hairline cracking as a consequence of this section being in tension. A proportion of fugitive dust will fall to the floor. Particles of the same order as the crack-width will settle almost immediately and will find their way into the cracks, tending to block them. The system will therefore homogeneously seal itself against dust loss.

Preferably the cross-section of the concrete tube corresponds generally to a box having a flat floor and rounded corners. This combines the advantages of low wind resistance with minimal loss of economy due to headroom restrictions. Preferably the concrete tube has a sloping top to dissipate rainwater.

The concrete tube may be of circular cross-section: because of its curved floor, it is then likely to be at a cost-disadvantage as it will require an additional, flat floor plate to be provided internally to support the conveyor.

A curved shape in cross-section reduces local bending moments to levels which can be accommodated by a single layer of reinforcement (in each orthogonal direction), and develops a structural action which relies more on axial forces than on localised bending. Axial forces in tension depend on the area of steel reinforcement provided and much less on its position within a cross-section, when compared to bending forces. The curved shape also reduces stress-concentrations at corners and other harsh changes of sectional direction.

The most heavily-loaded element in the cross-section is the floor. The effect of rounding the corners is to reduce the span of the floor significantly, giving a more efficient structure with inherent cost saving.

Rounded corners enable a smooth flow of stress around the cross-section and avoid stress concentrations at abrupt changes of sectional direction, as occur with a sharp-sided box shapes. The curved corners allow a smooth transfer of stress around the section. During erection, the section is subjected to dynamic loading and must be designed for a significant torsion. The curved corners also reduce the likelihood of fracturing the immature concrete during the early removal of formwork.

Making the concrete wall as thin as possible reduces self-weight and costs, and allows the unit to be erected using conventional cranes.

Stress, cover and fire-rating conditions determine sectional thicknesses, when free of compaction constraints during construction. Typically these constraints give a minimum wall thickness of 100 mm, which in box construction is capable of sustaining substantial loading.

The walls of the tube are preferably a maximum of 150 mm in thickness and preferably close to 100 mm. The cross-section is preferably reinforced with only two layers of reinforcing bars, one extending circumferentially and the other longitudinally, both positioned near the centre of the concrete section.

Typically in reinforced concrete, the reinforcement is located as close as possible to the face experiencing tension, consistent with the design depth of cover. The depth of cover is defined by codes of practice and is typically in the range 20 to 50 mm, depending on the circumstances. Typically, reinforced concrete will have reinforcing bars in two faces, possibly not coincidently (i.e. a double layer system).

In this invention, making use of thin elemental components, preferably the reinforcement bars are positioned along the centre line of the section (i.e. a single layer system). This is an inefficient arrangement for resisting bending moments across the section, but practical for resisting pure tension. The geometry of the cross-section is chosen to minimise bending moments whilst allowing the use of thin sections with single layer reinforcement, which provide benefits in terms of weight and cost.

Typically rounding the external corners of a box shape can reduce the wind loading to about one third that of the same section with sharp corners.

To construct an elevated reinforced concrete enclosure, insitu, is difficult, awkward and likely to produce a poor quality product, particularly if it has thin walls. The difficulty of constructing thin walls eliminates any saving in materials over more familiar shapes with thicker walls. Insitu construction requires propping, typically for 28 days after pouring. The linear nature of conveyors, sometimes passing over other buildings or roads and often high above ground, make insitu concrete construction difficult. Conveyors often run at angles inclined to the horizontal, which would make an insitu pour impractical or prohibitively expensive. By its very nature, a conveyor system meanders its way around an industrial complex. Erecting the conveyor enclosure using temporary towers, or constructing it from insitu concrete, may close access roads, may require complex support systems and is likely to be very disruptive. The invention allows delivery and fast-erection of individual tubular concrete units by simply lowering them onto the preconstructed trestles. Once lowered they remain stable in their temporary condition under their own self-weight.

Stability in the temporary condition may be achieved by forming the inclined units with a horizontal foot, on at least one side of each unit, which sits directly onto the horizontal mating surface of the trestle. Two sloping mating surfaces would generate a destabilising sliding force both long-term and short-term.

Precasting the concrete tubes enables steel formwork to be utilised, which in turn allows thin concrete sections to be produced. This completes the circle by allowing box-section units to be designed which are light enough to be lifted into place. The use of externally-vibrated steel formwork, removes the construction methodology constraints from the design equation and allow thin wall sections to be produced. By contrast, timber formwork, by its very nature, absorbs vibration and effectively precludes external vibration: it accordingly requires internal vibration and thicker wall sections.

Traditionally, insitu concrete uses timber formwork. This in turn determines the type of vibration methodology, usually immersion pokers. The use of immersion pokers then determines how the reinforcing bars are laid out and how thick the walls have to be. In conventional reinforced concrete construction, the wall thickness has become the dominant influence on the total structure load to be carried. The new generation of self-compacting concretes may in time become economic enough to overcome this shortcoming.

Steel formwork is generally accepted as being more accurate than that constructed from timber. It also allows better vibration of the concrete using external vibrators. Poker-type vibrators are difficult to use with thin sections as they tend to tangle with the reinforcement.

By using high quality steel formwork, the construction of conveyor enclosures is essentially de-skilled if the units are constructed on-site. Fixing the reinforcement is relatively straightforward, as is the vibration procedure if external vibrators are used. This enables the system to be used where skilled labour is scarce or expensive.

The formation of tubular enclosures with thin walls requires very accurate construction, with the rigidity of the formwork being crucial. Steel formwork is accepted as the most accurate and gives the highest quality results. Such formwork is however expensive to construct and heavy to move.

This invention preferably uses a lightweight shell formwork. The majority of the weight in the formwork is in its plating. Thin plates can accommodate the stresses set up by the wet concrete provided it is stiffened. Stiffening thin sheets using welded stiffeners often leads to a rippled surface which is unacceptable.

The stiffeners therefore preferably comprise ribs which can be conveniently formed by making folds in the steel plate. The space thus formed can then be filled with a timber pack, which can either be positioned flush with the face of the steel plate or may be used to form a slight indentation in the concrete face for aesthetic purposes. This timber member forms the enclosure with a convenient strip to which other attachments can then be fixed. This method of forming does not cause the heat-distortion which accompanies welded-construction.

The stiffened formwork can be arranged to allow a majority of sections thereof to be removed as early as possible for re-use, whilst leaving critical sections in place until the concrete has hardened sufficiently. This procedure requires additional sets of some formwork components to be manufactured in order to produce an efficient sequence of work.

The external surface of the conveyor enclosure will over a period of time be subjected to weather staining, the pattern of which will be dependent on the prevailing wet wind direction.

In the UK, vehicular loads less than 27.4 metres in length do not require permits from the Department of Transport and are usually allowed to travel without a police escort provided they are not wider than about 3 metres. The requirement for a police escort increases transport costs substantially.

Current practice of trestle-spacing and UK transport width and length regulations give the option to construct conveyor enclosures out of concrete in a remote location and transport them economically to site in one piece. Once delivered, the enclosure tubes are capable of being erected directly onto preconstructed trestles without any jointing or use of temporary support towers. To achieve this, the enclosure tubes must be light enough not to exceed allowable transport weights and strong enough to sustain their self-weight during lifting and moving.

Alternatively, the units may be delivered in two sections to reduce transport difficulties and then jointed on site, either by erection onto a temporary tower(s) positioned between the permanent trestles or alternatively cast flat on the ground prior to erection.

The units can also be constructed in an on-site casting facility if appropriate or possible.

To minimize any restraining stresses set up by the casting operation, the whole system may be supported on runners e.g. of PTFE.

In areas subject to unpredictable weather conditions (e.g. northern Europe), the enclosure tubes may be constructed wholly inside a low cost cloche, made up of a metal frame covered by sheeting or polythene or other plastics material: the cloche can be easily moved onto the next tube after casting the last.

The shape of the enclosure determines its method of casting, joint spacing and mould cost. Circular sections have to be cast vertically, whereas rectangular sections can be cast vertically or horizontally. Longer lengths can be achieved with horizontal casting. This also has the benefit of needing less access equipment, and eliminates the tilting operation prior to stacking. Additionally, the shuttering formwork for vertical casting will usually be more expensive than that for horizontal construction. These factors are likely to make a circular cross-section less economical than more box-like cross sections.

The preferred non-circular shapes, when cast horizontally, are proportioned so that the majority of roof slope of the cross-section during the casting phase does not exceed 15 degrees, thereby eliminating the need for a top shutter over the whole roof, which would make the placement and compaction of the concrete difficult.

Concrete is a poor thermal insulator and allows relatively fast cooling. As such it will facilitate man-access into a conveyor carrying hot materials fairly quickly after breakdown. As production may be on standstill, this time-gain can have significant economic implications. Making the tube wall as thin as possible is obviously beneficial in facilitating more rapid cooling. This fortunately does not significantly compromise the sound-and-dust-proofing qualities of the concrete below the required standards.

The hollow concrete conveyor enclosure by its very nature allows rapid heat dissipation, minimising the time required for the temperature to become low enough to allow man-access. Being of concrete, the conveyor enclosure has a high fire rating.

The shape and form of the enclosure lends itself to water cooling. This may conveniently achieved by running a supply pipe along the length of the tube, preferably at its highest point on the cross-section. The supply pipe may have holes along its length to allow water to trickle out and run down the cross-section thus cooling it when required. Alternatively sprinklers or some form of mist may be utilised. The system may allow localised cooling and/or cooling the whole length of the enclosure. Some or all of the water exits may be open together. The water may be collected in gutters and may in some cases be recycled.

Concrete experiences movement, not only due to temperature, but also due to shrinkage and creep. If the enclosure contains hot materials such as clinker, the movements may be significant. Lateral expansion and contraction of the enclosure are significantly less critical than movements along its length. Providing for longitudinal movement reduces the forces to be accommodated but does have the disadvantage of making the system inherently less stable.

Joints between units, while reducing stresses, are regarded as potential sources of trouble. The units may be made structurally continuous by rigidly jointing one section to the next, and they may or may not be rigidly connected to the trestles.

The system may or may not incorporate movement joints or stress-relief joints between sections. In other circumstances differential movement between tube sections may be acceptable.

In order to prevent dust egress at the movement joints, a flexible cover may be provided, which allows expansion and contraction and also rotation. A flexible bellows-type arrangement may be attached to both units, to extend around their perimeter to prevent dust loss.

To prevent sound loss, a double bellows may be provided, one part attached to the outside and the other part to the inside. These may or may not be filled with sound-deadening material which may be granular, plastic, semi-plastic or liquid. The whole gap between the two membranes may be filled or a secondary flexible tube may be provided, again filled with sound-deadening material.

The preferred solution is to cover the joint with two bellows fabricated from lead. Owing to its density lead is often used as a standard sound-deadening material: lead is flexible, easily fabricated and of relatively low cost; one bellows would be attached to the outer side of the concrete tube and the other to the inside.

The total elimination of the escape of fugitive dust would be prohibitively expensive and would require the standard of engineering used in the nuclear industry. Reinforced concrete is a low cost, simple, durable form of construction. Above a nominal tensile stress, the concrete cracks and the tensile load is carried by the reinforcement. Cracking of the concrete is accepted and national standards specify the acceptable crack width based on the surface appearance. Typical standards specify widths from 0.3 mm down to 0.1 mm for high quality work. Even in the most onerous conditions of concrete members in pure tension and designed to hold water, crack widths of 0.2 mm are deemed acceptable by national and international codes of practice.

Whether dust as fine as PM10 can escape through these very uneven cracks (albeit of codified widths) will emerge during use. It is perfectly possible that they will not. Cracks in concrete do have a tendency to self-heal. In addition, any dust which is lost will comprise a mixture of particle-sizes, which will tend to seal the crack. This is borne out by the experience of leaks in water tanks where cracks tend to seal themselves over a period of time.

Cracks in concrete may be due to the applied stress or due to shrinkage or creep. The correct procedure during construction can drastically reduce the amount of cracking during the construction of the structure. Pouring each unit in one with no construction joints is preferred, provided no restraint is set up. Preferably the steel shuttering is supported off the ground via runners or strips e.g. of PTFE, which allow the whole unit to shrink as it is hardening without restraint cracks being set up.

The gaps through which dust may escape from a concrete tube can be quantified by the design standard used. All concrete structures have a limitation on allowable crack width. Typical design values according to British Standards are 0.3mm, 0.25 mm, 0.2 mm, 0.1 mm and, for extreme situations (which normally requires prestressing), zero. The choice of acceptable crack width, at least if a water-retaining code is used, is determined by aesthetic criteria, not leakage.

Although a section in pure tension has a crack defined by the code of practice, in reality these sections do not leak fluid.

As with any concrete liquid-containing structure, the zones in pure tension can be coated with a flexible waterproofing coating to completely eliminate any possible losses.

Where the hairline cracks will occur can be extremely difficult to predict. Temperature stresses, either due to weather or due to the transportation of hot or cold materials, can cause serious distortion and damage to metal-clad structures. Reinforced concrete distributes these stresses but exactly where all hairline cracks will occur cannot be predicted. The ability to find and easily put a stop to leakage, when and if it becomes a problem, is a major advantage of this invention.

The smooth surface of the concrete tube enables areas of leakage via the hairline cracks to be accurately pinpointed and easily filled.

The exterior of the enclosure tube can be monitored for the escape of PM10 dust. Any areas which have not self-sealed and are causing leakage can be easily sealed, preferably externally by any number of means, the simplest being a coating of cement dissolved in water (cement-wash).

The design of the trestles and their foundations is strongly influenced, not by the wind-overturning moment along the trestle, but by the net uplift at the base of the trestle leg. Uplift is much more expensive to resist in a foundation than a downwards load. The inevitably heavier construction of a concrete enclosure is likely to reduce foundation costs rather than increase them, as the net uplift is reduced or even eliminated.

Completing the sealing joints between individual tubes is non-disruptive both to the site overall and to the link-up and commissioning of the conveyor. The conveyors may be installed inside the tubes prior to lifting into place and may be loose or permanently fixed in place. This allows much faster commissioning of the system, and is advantageous particularly if the conveyor is at a steep incline.

Embodiments of the present invention will now be described by way of examples only and with reference to the accompanying drawings, in which:
FIGURES 1 to 3 are cross-sections through respective embodiments of tubular concrete enclosure in accordance with the present invention;
FIGURE 4 is a view of an internal formwork used for casting the enclosure of Figure 1, the metal reinforcement for the enclosure being shown positioned around the internal formwork;
FIGURE 5 is a view of the external formwork used for casting the enclosure;
FIGURE 6 is a view of the enclosure cast using the formworks shown in Figures 4 and 5;
FIGURE 7 is a schematic view showing a procedure for moving the vertically-cast enclosure to a horizontal orientation;
FIGURE 8 shows the enclosure in horizontal orientation;
FIGURE 9 shows the enclosure being lifted onto a road trailer for transport;
FIGURE 10 is a view of a support trestle cast horizontally;
FIGURE 11 is an enlarged view of a foot of the trestle of Figure 10;
FIGURE 12 is a schematic view to show the trestle being moved to a vertical position;
FIGURE 13 shows a number of the trestles laid on a road trailer for transport;
FIGURE 14 is a schematic view showing a trestle being erected on site;
FIGURE 15 is a view showing a tubular concrete enclosure resting at one end on the top of a trestle and at its other end on a temporary support tower;
FIGURE 16 is a sectional view of a joint between two tubular concrete enclosures;
FIGURE 17 is a similar section through an alternative joint;
FIGURE 18 is a view of several enclosures jointed end-to-end;
FIGURE 19 is a cross-section through an assembly of internal and external formwork readied for casting a tubular concrete enclosure in horizontal orientation;
FIGURE 20 is a similar cross-section showing the assembly once the concrete has been introduced;
FIGURE 21 is a similar cross-section showing the cast enclosure with most of the formwork removed;
FIGURE 22 is a similar cross-section showing the cast enclosure with all formwork removed, except a bottom supporting section thereof;
FIGURE 23 is a view showing a tubular concrete enclosure being lifted into position; and
FIGURE 24 is a view of a joint of lead between two tubular concrete enclosures.

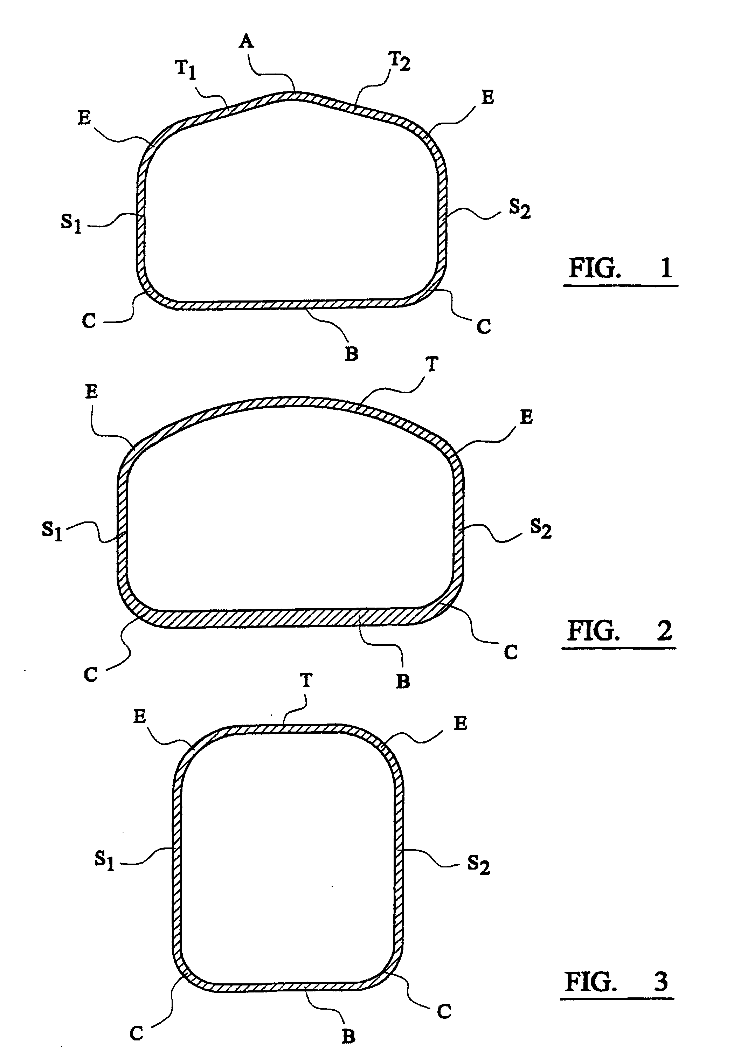

Referring to Figures 1 to 3 of the drawings, there are shown three different cross-sectional shapes for the tubular concrete enclosure of the present invention. In Figure 1, the enclosure is of generally rectangular cross-section, with a flat bottom B and rounded corners C between the bottom and opposite sides S1,S2: the top wall comprises two symmetrical sections T1,T2 sloping downwards from a rounded apex A to rounded corners E which merge with the opposite side walls S1,S2. The enclosure of Figure 2 is similar in cross-sectional shape to the enclosure of Figure 1, except that its top wall T comprises a curved dome which merges with the side walls S1, S2 via rounded corners E, and the bottom wall B is thickened relative to the other walls. The enclosure of Figure 3 is generally rectangular, with its depth greater than its width, and its four corners are rounded.

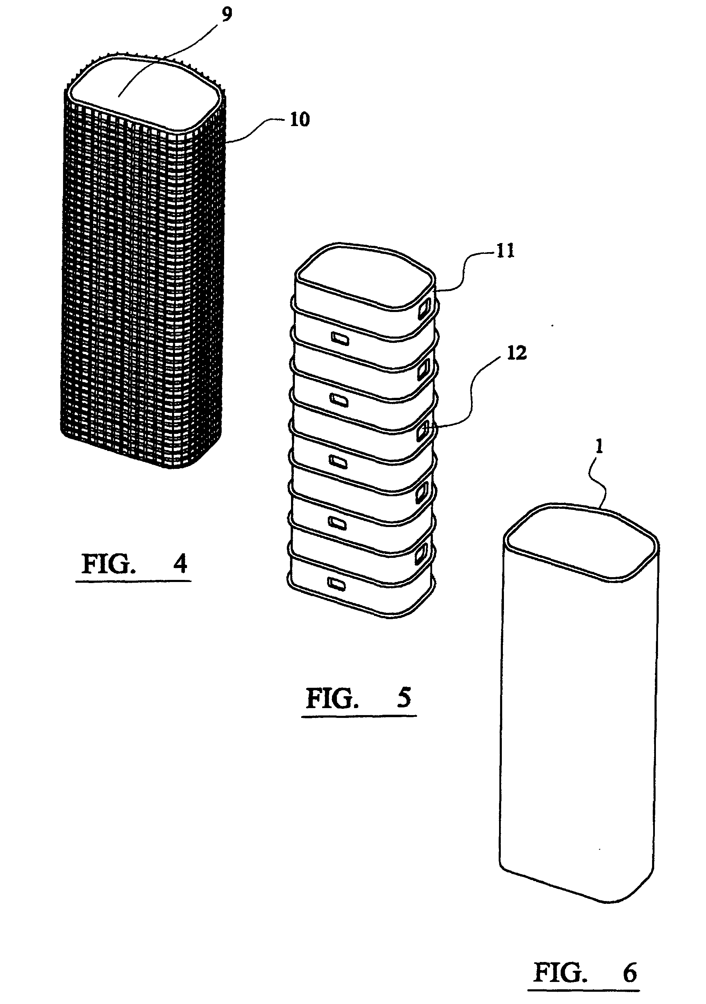

Figures 4 to 6 show the tubular enclosure of Figure 1 being cast in vertical orientation. Internal formwork 9 of steel is positioned vertically and the steel reinforcing mesh 10 for the enclosure is positioned around the internal formwork. An external formwork 11 is then positioned around the assembly shown in Figure 4, the external formwork 11 comprises a series of steel rings which are lowered one-after-another over and around the assembly of Figure 4: each of the steel rings registers on the steel ring below and it is bolted to it. Concrete is then poured into the space between the internal and external formwork and around the reinforcing mesh: the concrete is compacted by means of vibrators 12 mounted to the outside of the external formwork 11. After the concrete has cured, the internal and external formwork is withdrawn, leaving the tubular reinforced concrete enclosure 1 standing vertically.

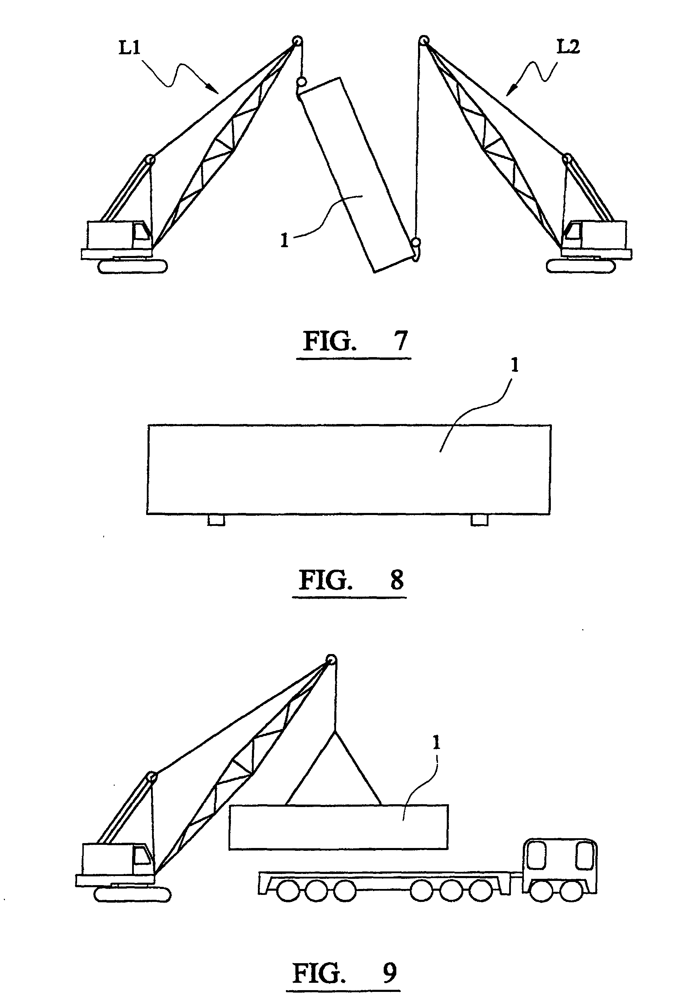

Referring to Figure 7, the vertically-standing enclosure 1 is then brought to a horizontal orientation (shown in Figure 8), using a pair of cranes L1,L2 acting on the opposite ends of the enclosure. Then the enclosure can be lifted onto a road trailer (Figure 9) for transport.

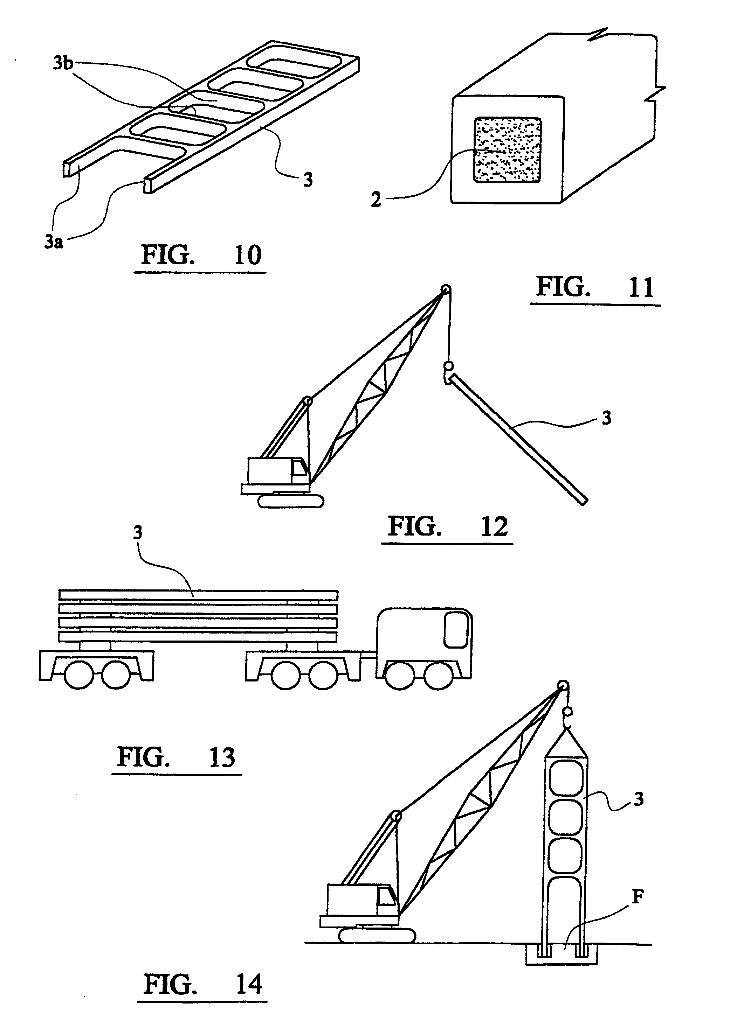

Referring to Figure 10, the support trestles 3 may be cast in horizontal position. The trestle shown is generally flat and comprises a pair of spaced legs 3a joined by a number of cross-pieces 3b: the legs 3a project at the foot end of the trestle. As shown in Figure 11, the legs 3a and cross pieces 3b of the trestle may comprise a central core 2 of foamed plastics material, around which the concrete is cast. A number of the trestles 3 may be laid one-upon-another on a road trailer, as shown in Figure 13, for transport. A crane is used, as shown in Figure 12, for lifting each trestle 3 to the vertical: the trestle is erected in vertical position, on site, by locating the bottom ends of its legs in respective sockets in a concrete foundation block F: these sockets are filled with concrete or grouting once the trestle has been aligned.

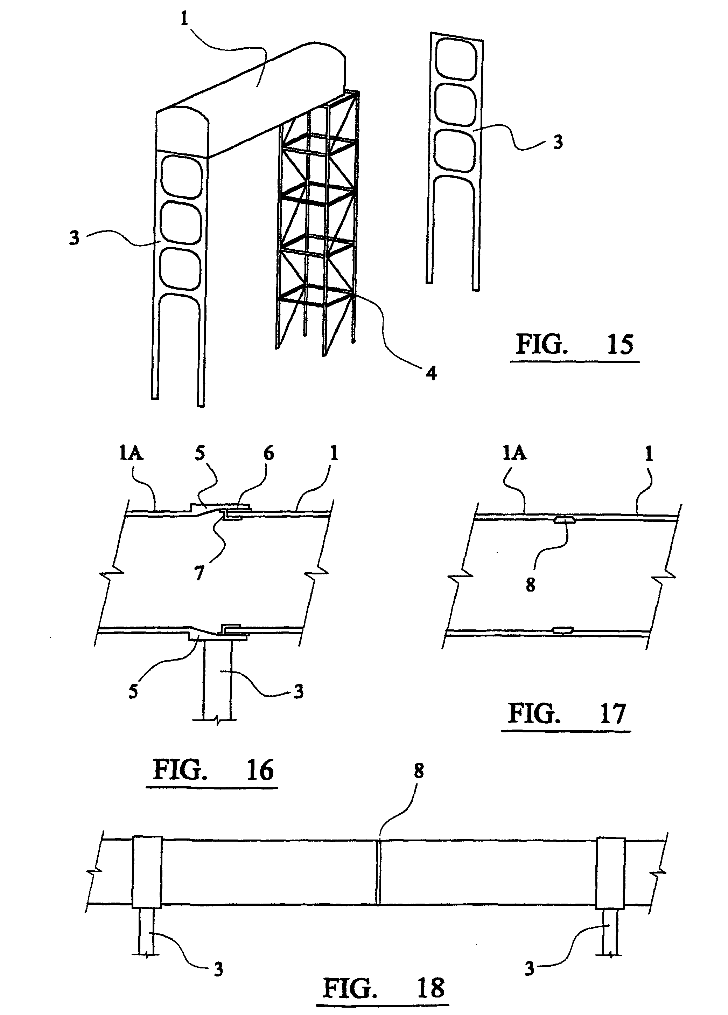

Figure 15 shows two trestles 3 erected at a predetermined spacing, and a support tower 4 temporarily erected half way between them. A tubular concrete enclosure 1 has been lifted into its elevated position, with one end resting on one of the trestles 3 and its other end rested on the temporary support tower 4. Subsequently, a second tubular concrete enclosure will be lifted into position, with one end on the support tower 4 and its other end on the second trestle, the two enclosures being aligned and juxtaposed end-to-end. The two tubular concrete enclosures must then be jointed structurally, so that the support tower 4 can be removed.

It will be appreciated that a series of trestles 3 will be erected along the line which the conveyor is to follow, and the appropriate number of tubular concrete enclosures brought into position and joined together end-to-end. Figure 16 shows one form of joint between a pair of tubular enclosures: in this case, the end of one enclosure 1 is received within the enlarged end of the other enclosure 1A, and permits sliding movement; a flexible seal 7 covers the joint, on its inner side, and keeps the joint dustproof. Figure 17 shows an annular concrete joint 8 cast internally at the junction between two tubular enclosures 1,1A, to structurally unite the two enclosures. Figure 18 is a side view of a portion of a completed conveyor enclosure, having joints of the type shown in Figure 16 positioned at the locations of the trestles 3, and a joint of the type shown in Figure 17 positioned mid-way between a pair of trestles.

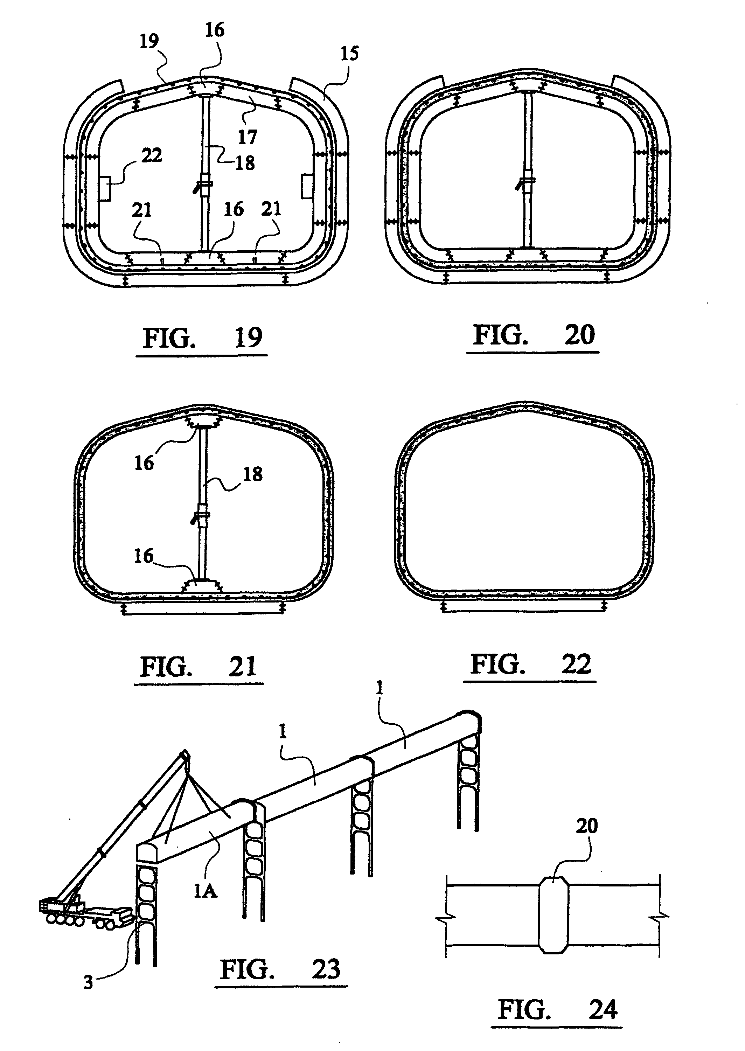

Figures 19 to 22 show the tubular concrete enclosure of Figure 1 being cast in horizontal orientation. Internal and external formwork is assembled from a number of sections coupled together, with reinforcing mesh 19 for the tubular enclosure positioned in the space between the internal and external formwork. In the internal formwork, a centre-bottom section 16 supports a prop 18 which in turn supports a centre-top section 16A: bottom sections 21 are coupled to the centre-bottom section 16 and top sections 17 are coupled to the centre-top section 16A, and corner and side sections are coupled between the bottom sections 21 and top sections 17. The top of the external formwork is left open, between top-corner sections 15. The space between the internal and external formwork is then filled with concrete, through the open top of the external formwork (Figure 20), and is compacted by means of vibrators e.g. 22 attached to the formwork. Once the concrete is partially cured, the internal and external formwork is removed, except the bottom section 15A of the external formwork and the centre-bottom and centre-top sections 16,16A (and the prop 18) of the internal formwork (Figure 21). The enclosure is allowed to cure fully before the remainder of the internal formwork is removed (Figure 22).

Figure 23 shows a series of trestles 3 erected in a line, and two tubular concrete enclosures 1 already in position, each spanning the full distance between an adjacent pair of trestles: a third enclosure 1A is shown being lifted into position. Each adjacent pair of tubular concrete enclosures are sealed together by means of a lead joint 20 (Figure 24).

In each of the embodiments which have been described, the tubular concrete enclosure may be cast with pipes embedded in one or more of its walls, these pipes then being arranged to carrying cooling fluid. The pipes are preferably in contact with the reinforcing bars, which then conduct heat to the pipes to the pipes. The heat extracted by the cooling fluid may then be recycled.

## Claims

1. An elevated enclosure system for bulk handling systems, the enclosure system comprising a number of upright supports (3) and a number of tubular units (1) which have been lifted into position so that each tubular unit spans an adjacent pair of upright supports and acts as a beam, each tubular unit (1) being formed of reinforced concrete and having a wall thickness no greater than 150mm, with the corners (C,E) between its side walls (S₁,S₂) and top and bottom walls (A B) rounded both internally and externally.

2. An enclosure system as claimed in claim 1, in which reinforcing bars (9,10) are embedded in the walls of each tubular unit, the reinforcing bars extending in orthogonal directions near the central plane of the respective wall of the tubular unit.

3. An enclosure system as claimed in claim 1 or 2, in which each tubular unit comprises a generally flat base wall (B) and generally upright side walls.

4. An enclosure system as claimed in any preceding claim, in which each tubular unit comprises a top wall (A) which slopes.

5. An enclosure system as claimed in any preceding claim, in which pipes for carrying cooling fluid are embedded in at least one wall of each tubular unit.

6. A method of erecting an elevated enclosure system for bulk handling systems, the method comprising the steps of erecting a number of upright supports (3), then lifting tubular units (1) into position so that each tubular unit spans an adjacent pair of upright supports, each tubular unit being formed of reinforced concrete and having a wall thickness no greater than 150mm, with the corners (C, E) between its side walls (S₁, S₂) and top and bottom walls (A B) rounded both internally and externally.

7. A method as claimed in claim 6, in which the tubular units are precast at a remote location.

8. A method as claimed in claim 6, in which the tubular units are precast on site.

9. A method as claimed in any one of claims 6 to 8, in which each of the tubular units is cast in vertical orientation between internal and external formwork.

10. A method as claimed in any of claims 6 to 8, in which each of the tubular units is cast in horizontal orientation between internal and external formwork.

11. A method as claimed in claim 10, in which the internal and external formwork comprise a plurality of sections, the majority of which are removed once the concrete is partially set, sections of the internal formwork supporting the top wall of the unit being left in place.

12. A method as claimed in any one of claims 9 to 11, in which at least some sections of the formwork are of steel and vibrators are mounted to those sections, for compacting the concrete.

## Patentansprüche

1. Hochstehendes Einfassungssystem für Fördersysteme für Massengüter, wobei das Einfassungssystem eine Anzahl aufrechter Stützen (3) und eine Anzahl Rohreinheiten (1) umfasst, welche in eine solche Stellung gehoben worden sind, so dass jede Rohreinheit ein benachbartes Paar aufrechter Stützen überspannt und als ein Träger wirkt, wobei jede Rohreinheit (1) aus Stahlbeton gebildet ist und eine Wanddicke von nicht größer als 150 mm aufweist, wobei die Ecken (C, E) zwischen ihren Seitenwänden (S₁, S₂) und den Decken- und Bodenwänden (A, B) sowohl innen als auch außen abgerundet sind.

2. Einfassungssystem, wie in Anspruch 1 beansprucht, in welchem Verstärkungsriegel (9,10) in den Wänden jeder Rohreinheit eingebettet sind, wobei sich die Verstärkungsriegel nahe der Zentralebene der jeweiligen Wand der Rohreinheit in orthogonale Richtungen erstrecken.

3. Einfassungssystem, wie in Anspruch 1 oder 2 beansprucht, in welchem jede Rohreinheit eine im allgemeinen flache Basiswand (B) und im allgemeinen aufrechte Seitenwände umfasst.

4. Einfassungssystem, wie in einem der voranstehenden Ansprüche beansprucht, in welchem jede Rohreinheit eine Deckenwand (A) umfasst, die schräg abfällt.

5. Einfassungssystem, wie in einem der voranstehenden Ansprüche beansprucht, in welchem Rohre zum Tragen von Kühlmittel in wenigstens einer Wand einer jeden Rohreinheit eingelassen sind.

6. Verfahren zum Aufbau eines hochstehenden Einfassungssystems für Fördersysteme für Massengüter, bei dem das Verfahren die Schritte des Aufstellens einer Anzahl aufrechter Stützen (3), dann Anheben der Rohreinheiten (1) in Positionen, so dass jede Rohreinheit ein benachbartes Paar aufrechter Stützen überspannt, umfasst, wobei jede Rohreinheit aus Stahlbeton gebildet ist und eine Wanddicke von nicht größer als 150 mm aufweist, wobei die Ecken (C, I) zwischen ihren Seitenwänden (S₁, S₂) und Decken- und Bodenwänden (A, B) sowohl innen als auch außen abgerundet sind.

7. Verfahren, wie in Anspruch 6 beansprucht, in welchem die Rohreinheiten an einem entfernten Ort vorgefertigt werden.

8. Verfahren, wie in Anspruch 6 beansprucht, in welchem die Rohreinheiten an Ort und Stelle vorgefertigt werden.

9. Verfahren, wie in einem der Ansprüche 6 bis 8 beansprucht, in welchem jede der Rohreinheiten in vertikaler Ausrichtung zwischen interner und externer Verschalung gegossen wird.

10. Verfahren, wie in einem der Ansprüche 6 bis 8 beansprucht, in welchem jede der Rohreinheiten in horizontaler Ausrichtung zwischen interner und externer Verschalung gegossen wird.

11. Verfahren, wie in Anspruch 10 beansprucht, in welchem die interne und externe Verschalung eine Vielzahl von Abschnitten umfasst, von denen die Mehrzahl entfernt werden, nachdem einmal der Beton teilweise gehärtet ist, wobei Abschnitte der internen Verschalung, die die Deckenwand der Einheit stützen, an ihrem Platz gelassen werden.

12. Verfahren, wie in einem der Ansprüche 9 bis 11 beansprucht, in welchem wenigstens einige Abschnitte der Verschalung aus Stahl sind und an diese Abschnitte Rüttler angebracht sind, um den Beton zu verdichten.

## Revendications

1. Système d'enceinte surélevé pour systèmes de manipulation de vrac, le système d'enceinte comprenant un nombre de supports verticaux (3) et un nombre d'unités tubulaires (1) qui ont été soulevés en position, de sorte que chaque unité tubulaire enjambe une paire adjacente de supports verticaux et joue le rôle d'une poutre, chaque unité tubulaire (1) étant formée de béton armé et ayant une épaisseur de paroi qui n'est pas supérieure à 150 mm, avec les coins (C, E) entre ses parois latérales (S1, S2) et des parois supérieure et inférieure (A, B) arrondies à la fois de façon interne et de façon externe.

2. Système d'enceinte selon la revendication 1, dans lequel des barres de renforcement (9, 10) sont encastrées dans les parois de chaque unité tubulaire, les barres de renforcement s'étendant dans des directions orthogonales à proximité du plan central de la paroi respective de l'unité tubulaire.

3. Système d'enceinte selon la revendication 1 ou 2, dans lequel chaque unité tubulaire comprend une paroi (B) de base généralement plate et des parois latérales généralement verticales.

4. Système d'enceinte selon l'une quelconque des revendications précédentes, dans lequel chaque unité tubulaire comprend une paroi supérieure (A) qui penche.

5. Système d'enceinte selon l'une quelconque des revendications précédentes, dans lequel des canalisations de transport de fluide de refroidissement sont encastrées dans au moins une paroi de chaque unité tubulaire.

6. Procédé de construction d'un système d'enceinte surélevé pour des systèmes de manipulation de vrac, le procédé comprenant les étapes de construction d'un nombre de supports verticaux (3), puis de soulèvement d'unités tubulaires (1) en position, de sorte que chaque unité tubulaire enjambe une paire adjacente de supports verticaux, chaque unité tubulaire étant formée de béton armé et ayant une épaisseur de paroi qui n'est pas supérieure à 150 mm, avec les coins (C, E) entre ses parois latérales (S1, S2) et des parois supérieure et inférieure (A, B) arrondies à la fois de façon interne et de façon externe.

7. Procédé selon la revendication 6, dans lequel les unités tubulaires sont moulées au préalable en un endroit distant.

8. Procédé selon la revendication 6, dans lequel les unités tubulaires sont moulées au préalable sur site.

9. Procédé selon l'une quelconque des revendications 6 à 8, dans lequel chacune des unités tubulaires est moulée dans le sens vertical entre des travaux de coffrage internes et externes.

10. Procédé selon l'une quelconque des revendications 6 à 8, dans lequel chacune des unités tubulaires est moulée dans le sens horizontal entre des travaux de coffrage internes et externes.

11. Procédé selon la revendication 10, dans lequel les travaux de coffrage internes et externes comprennent une pluralité de sections, la majorité d'entre elles étant retirée une fois le béton partiellement pris, des sections des travaux de coffrage internes supportant la paroi supérieure de l'unité laissée en place.

12. Procédé selon l'une quelconque des revendications 9 à 11, dans lequel au moins certaines sections des travaux de coffrage sont en acier et des secoueurs sont montés sur ces sections à des fins de compactage du béton.
